# EUROPÄISCHE PATENTSCHRIFT

(11) **EP 0 508 092 B1**
(45) Veröffentlichungstag und Bekanntmachung des Hinweises auf die Patenterteilung: **12.06.1996**
(21) Anmeldenummer: 92103537.4
(22) Anmeldetag: 02.03.1992
(51) Int. Cl.: C08L 59/02

(54) **Modifizierte Polyoxymethylenmischung und ihre Verwendung**
Modified polyoxymethylene composition and its use
Composition de polyoxyméthylène modifiée et son utilisation

(30) Priorität: 12.03.1991 DE 4107875
(43) Veröffentlichungstag der Anmeldung: 14.10.1992
(73) Patentinhaber: HOECHST AKTIENGESELLSCHAFT, D-65926 Frankfurt am Main (DE)
(72) Erfinder: Fleischer, Dietrich, Dr., W-6100 Darmstadt (DE); Schlaf, Helmut, Dr., W-6233 Kelkheim (Taunus) (DE); Schleith, Oskar, W-6238 Hofheim am Taunus (DE)

(56) Entgegenhaltungen:
- EP-A- 0 156 285
- EP-A- 0 421 723
- DE-A- 3 441 547

## Beschreibung

Die Erfindung betrifft Polyoxymethylene, die mit Polytetrafluorethylen (PTFE) oder mit PTFE und einem kautschukelastischen Pfropfcopolymer modifiziert sind und ihre Verwendung.

Polyoxymethylene (POM), auch als Polyacetale bezeichnet, werden seit langem als vielseitige Werkstoffe vor allem im technischen Bereich eingesetzt. Sie eignen sich wegen ihrer hervorragenden mechanischen Eigenschaften wie hoher Steifigkeit, Härte und Festigkeit, sowie der Möglichkeit, Formteile und Formkörper in engen Toleranzen herzustellen und der guten Beständigkeit gegenüber vielen Chemikalien vielfach als Metallersatz. Für eine Reihe potentieller Anwendungen auf dem Sektor des Extrusionsblasens weisen sie allerdings aufgrund ihrer linearen molekularen Struktur eine zu geringe Schmelzenfestigkeit auf. Für solche Anwendungsgebiete ist es wünschenswert, neben POM mit verzweigter oder vernetzter Kettenstruktur- und damit hoher Schmelzenviskosität- über polymere Produkte zu verfügen, die bei geringen Scherbeanspruchungen genügend hohe Schmelzenfestigkeiten in einem breiten Temperaturbereich aufweisen, aber dennoch bei hohen Scherbeanspruchungen geringe Schmelzviskositäten besitzen.

Es sind Methoden bekannt, die Schmelzenfestigkeit von POM durch Zumischen von Polyurethan zu erhöhen und POM damit dem Verfahren des Extrusionsblasens zugänglich zu machen (EP-A 0 120 711 und EP-A 0 121 407).

Es werden auch Formmassen aus thermoplastischen Polymeren, u.a. auch POM mit PTFE, beansprucht, die letzteres in Form feiner, mikro- oder submikrofaseriger Teilchen enthalten (DE-B 12 86 302). Als Vorteile werden die Verbesserung der Schmelzenelastizität und Erhöhung der Schmelzenviskosität angeführt, die für die Verarbeitung und für spezielle Anwendungen wichtige Parameter darstellen.

In den zitierten Veröffentlichungen nicht erwähnt wird der Einfluß der Zuschlagstoffe auf die Schmelzenfestigkeit des Matrixmaterials, die üblicherweise der Schmelzenelastizität entgegenläuft. Gleichfalls unerwähnt bleiben die Veränderungen der optischen, physikalischen und mechanischen Eigenschaften der Mischungen aus Thermoplasten, speziell POM, und geringen Mengen PTFE. Es werden weiterhin keine Angaben über die Spezifikation der verwendeten PTFE-Pulver, sowie die einzustellende Morphologie der Blends gemacht, die für eine optimale Verbesserung der Schmelzenfestigkeit notwendig ist.

Es bestand die Aufgabe, sowohl unmodifiziertes als auch elastomer-modifiziertes POM mit unterschiedlichen Schmelzenviskositäten bereitzustellen, das gegenüber den Ausgangsprodukten wesentlich verbesserte Schmelzenfestigkeiten aufweist.

Diese Aufgabe wurde dadurch gelöst, daß kleine Mengen geeigneter PTFE-Pulver den POM-Komponenten zugesetzt werden.

Die Erfindung betrifft modifiziertes Polyoxymethylen, bestehend aus einer Mischung von
A) Polyoxymethylen-Homopolymer oder Polyoxymethylen-Copolymer und
C) 0,01 - 5 Gew.-%, bezogen auf die Gesamtmischung, Polytetrafluorethylen mit einer Schmelzenviskosität im Bereich von 10³ bis 60 · 10⁹ Pa·s, gemessen bei 380°C,
   und gegebenenfalls
(B) 5 - 50 Gew.-%, bezogen auf die Mischung der Komponenten A) und B), eines kautschukelastischen Pfropfcopolymeren sowie üblichen Zusatzstoffen,
   dadurch gekennzeichnet, daß das zur Herstellung der Mischung eingesetzte Polytetrafluorethylen als Pulver mit einer mittleren Teilchengröße d₅₀ von mindestens 30 µm verwendet wird, daß das Polytetrafluorethylen in der Mischung in fibrillärer Struktur vorliegt, wobei die Länge der Fibrillen (1) 50 bis 300 µm und der Fibrillendurchmesser (d) 2 bis 20 µm betragen sowie das l/d-Verhältnis ≥ 5 ist.

Schließlich hat die Erfindung die Verwendung der Mischung zur Herstellung von Hohlblaskörpern und/oder Behältern, zum Gegenstand.

Überraschenderweise wird neben der Erhöhung der Schmelzenfestigkeit, vor allem bei schlagzähmodifizierten Systemen eine deutliche Verbesserung der Zähigkeitseigenschaften beobachtet. Überraschend ist ebenfalls, daß durch den Zusatz von PTFE auch nicht vernetzte oder verzweigte Polyoxymethylene extrusionsgeblasen werden können.

Ein wesentliches Merkmal der Mischungen ist die Form und der Gehalt der Komponente C), dessen Menge im allgemeinen 0,01 bis 5,0 Gew.-%, vorzugsweise 0,05 bis 3,0 Gew.-% und insbesondere 0,1 bis 1,5 Gew.-%, bezogen auf die Gesamtmischung, beträgt.

Ein weiteres wesentliches Merkmal der Mischungen gemäß der Erfindung ist deren morphologischer Aufbau. Es hat sich als notwendig erwiesen, daß die PTFE-Anteile in der Mischung eine bestimmte fibrilläre Struktur ausbilden. Die Länge der Fibrillen (1) beträgt dabei max. 300 µm bis minimal 50 µm, bevorzugt 250 bis 75 µm, insbesondere 200 bis 100 µm. Die Fibrillendurchmesser (d) sollen dabei 20 µm nicht über- und 2 µm, vorzugsweise 2,5 µm nicht unterschreiten. Das l/d-Verhältnis sollte ≥ 5, vorzugsweise ≥ 10 sein.

Das als Komponente C) verwendete PTFE ist ein technisch hergestelltes Suspensions- oder Emulsionspolymerisat. In seiner Anwendungsform liegt es als rieselfähige Pulver oder als PTFE-Dispersion mit Wasser als Dispergiermittel vor.

Die Schmelzenviskositäten geeigneter Pulver, gemessen bei 380 °C, variieren von 10³ Pa·s bis 60 · 10⁹ Pa·s. Die mittlere Teilchengröße d₅₀ der Pulver reicht von 30 bis 600 µm. Sogenannte Mikropulver mit Teilchengrößen von kleiner als 10 µm sind wirkungslos, weil sie nicht zur Ausbildung der erforderlichen Fibrillenstruktur geeignet sind.

Als Basispolymere (Komponente A) werden die bekannten Polyoxymethylene eingesetzt, wie sie beispielsweise in der DE-A 29 47 490 beschrieben sind. Es handelt sich hierbei im allgemeinen um unverzweigte lineare Polymere, die in der Regel mindestens 80 %, vorzugsweise mindestens 90 % Oxymethyleneinheiten (-CH₂O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind dabei solche Polymere, deren Hydroxylendgruppen in bekannter Weise chemisch gegen Abbau stabilisiert sind, z.B. durch Veresterung oder Veretherung.

Copolymere sind Polymere aus Formaldehyd oder seinen cyclischen Oligomeren, insbesondere Trioxan, und cyclischen Äthern, cyclischen Acetalen und/oder linearen Polyacetalen.

Als Comonomere kommen a) cyclische Äther mit 3, 4 oder 5, vorzugsweise 3 Ringgliedern, b) von Trioxan verschiedene cyclische Acetale mit 5-11, vorzugsweise 5, 6, 7 oder 8 Ringgliedern und c) lineare Polyacetale, jeweils in Mengen von 0,1-20, vorzugsweise 0,5-10 Gew.-%, in Frage. Am besten eignen sich Copolymere aus 99,5-95 Gew.-% Trioxan und 0,5-5 Gew.-% einer der vorgenannten Cokomponenten.

Weiterhin werden Mischungen, bestehend im wesentlichen aus Polyoxymethylen (Komponente A) und einem kautschukelastischen Pfropfcopolymeren, dessen Partikel aus einem kautschukelastischen, einphasigen Kern auf Basis von Polydien und einer harten Pfropfhülle aufgebaut sind (Komponente B), wie sie beispielsweise in der EP-A 0 156 285 beschrieben sind, als Basispolymere verwendet.

Die Mischung gemäß der Erfindung kann gegebenenfalls noch bekannte Zusatzstoffe, wie Stabilisatoren, Nukleierungsmittel, Antistatika, Lichtschutzmittel, Pigmente, Farbstoffe, enthalten, deren Menge bis zu 50 Gew.-% - bezogen auf die Gesamtmischung - betragen kann.

Die Herstellung der Mischungen erfolgt durch intensives Mischen der Bestandteile bei erhöhter Temperatur, d.h. im allgemeinen bei Temperaturen oberhalb des Schmelzpunktes der Komponente A, also bei etwa 160 bis 250 °C, vorzugsweise bei 180 bis 220 °C, in gut mischenden Aggregaten z.B. Knetern, Extrudern, vorzugsweise Zweischneckenextrudern, oder auf Mischwalzen. Üblicherweise werden die pulverförmigen Komponenten zunächst bei Raumtemperatur mechanisch gemischt und anschließend zur vollständigen Homogenisierung aufgeschmolzen. Es hat sich dabei gezeigt, daß die Ausbildung der Fibrillenmorphologie, die bei dieser Homogenisierung erfolgt, einen wesentlichen Einfluß auf die rheologischen Eigenschaften der Mischungen ausübt und entscheidend von der Schmelzenviskosität der Matrix abhärigt. Die Viskositäten des Matrixmaterials sollten dabei 10 000 bis 800 Pa·s betragen. Bei der Herstellung von Mischungen mit leichtfließenden Matrixmaterialien (Komponente A) ist es jedoch von Vorteil, anstelle des reinen PTFE-Pulvers ein vorgemischtes Konzentrat im Verhältnis 4 : 1 bis 99 : 1 aus einem hochmolekularen d.h. hochviskosem Polyoxymethylen und PTFE-Pulver zu verwenden.

Die aus den Mischungen hergestellten Hohlblaskörper werden in bekannter Weise aus schlauchförmigen Vorformlingen nach diskontinuierlichem oder kontinuierlichem Extrusionsblasen erzeugt. Die dabei einzuhaltenden Verarbeitungstoleranzen sind weit weniger eng als bei Verwendung von unmodifiziertem Polyoxymethylen, was die Herstellung erleichtert und zu weniger Ausschußware führt.

So sollte das unmodifizierte plastifizierte Material beim Auftritt aus der Düse eine Temperatur von etwa 185 °C haben. Der Düsenbereich am Kopfaustritt muß ausreichend beheizt sein (≤ 170 °C), da sich sonst durch Temperaturunterschiede in der Schlauchwandung eine unregelmäßige Schlauchschwellung einstellt, die wiederum eine präzise Einstellung der Wanddicke des Hohlblaskörpers erschwert.

Zur Verhinderung eines Abreißens des extrudierten Schlauches bei zu großer Länge muß in der Regel der Düsenspalt in bekannter Weise kontinuierlich vergrößert werden, um die Wanddicke des Schlauches zu regulieren. In gleicher Weise muß die Düse-Dorn-Kombination dem zu verarbeitenden Polyoxymethylen in sehr engen Grenzen angepaßt werden.

### Beispiele:

Die beschriebenen Eigenschaften wurden wie folgt bestimmt:

| | |
|---|---|
| MFI 190/2,16: | DIN 53 735 |
| Kerbschlagzähigkeit, aₖ: | DIN 53 453, Normkleinstab |
| Schmelzenfestigkeit: | Interne Methode, siehe nachstehend |

Als Komponente A wurden Copolymere auf Basis Trioxan/Ethylenoxid bzw. Dioxolan, die durch ihre Schmelzenviskosität bei 190 °C charakterisiert sind, eingesetzt.

Die Komponente B umfaßt kautschukelastische Pfropfcopolymere mit Polybutadien als Propfbasis und Styrol sowie Methylmethacrylat als Pfropfkomponenten.

Als Komponente C wurden nach unterschiedlichen Verfahren hergestellte PTFE-Pulver mit den in der Tabelle angegebenen Merkmalen verwendet.

### Beispiele 1 bis 5

Die in der Tabelle zu den Beispiele 1-5 und den Vergleichsbeispielen aufgeführten Komponenten wurden in den angegebenen Gewichtsverhältnissen in einem Doppelschneckenextruder, ZSK-28 der Fa. WERNER & PFLEIDERER (Stuttgart, Bundesrepublik Deutschland) gemischt. Die Massetemperatur des Mischgutes lag bei etwa 200-220 °C (Gehäusetemperatur ca. 190 °C). An dem getrockneten Granulat wurde die Schmelzenfestigkeit gemessen. Zur Messung der Kerbschlagzähigkeit wurde das Granulat in üblicher Weise zu Prüfkörpern verspritzt, an denen die in der Tabelle angeführten Werte ermittelt wurden.

### Methode zur Messung der Schmelzenfestigkeit (Rheotensmessung):

Das zu untersuchende Polymere wird in einem 20 mm Schwenkextruder bei 180 °C aufgeschmolzen. Mit einer Schergeschwindigkeit von 100 l/s und einer Austragsmenge zwischen 9 und 11 g/min wird das Polymere durch eine Schlitzdüse (10 x 1 mm) nach unten extrudiert.

Eine unter der Düse montierte Abzugsvorrichtung erfaßt das Schmelzenband und zieht es zunächst synchron zur Austragsgeschwindigkeit mit einer Kraft Null ab. Durch Anlegen einer Abzugsbeschleunigung von 0,24 cm/s² nähert sich die Abzugskraft einem maximalen Wert, bei dem das Schmelzenband reißt. Der dabei gemessene Wert "Fa" ist ein Maß für die Schmelzenfestigkeit der untersuchten Probe.

Die Ergebnisse zeigen, daß die Schmelzenfestigkeitswerte der Mischungen gemäß den Beispielen 1 bis 5 erheblich höher sind als die Vergleichsbeispiele mit nicht modifizierten oder mit PTFE-Mikropulver modifiziertem POM. Die Mischungen mit den höheren Werten haben Vorteile bei der Verarbeitung z.B. beim Extrusionsblasen.

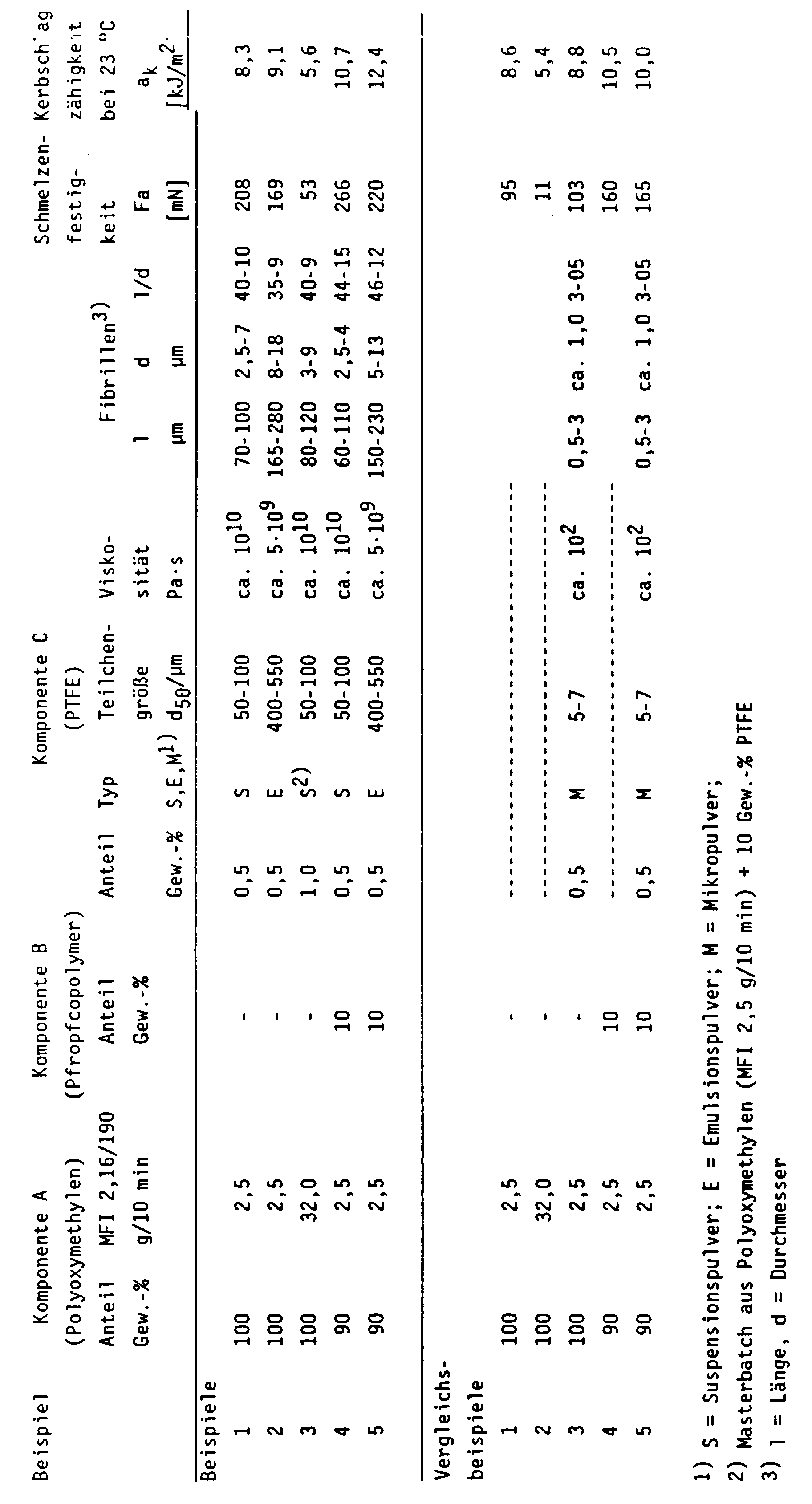

## Patentansprüche

1. Modifiziertes Polyoxymethylen, bestehend aus einer Mischung von
A) Polyoxymethylen-Homopolymer oder Polyoxymethylen-Copolymer und
C) 0,01 - 5 Gew.-%, bezogen auf die Gesamtmischung, Polytetrafluorethylen mit einer Schmelzenviskosität im Bereich von 10³ bis 60 · 10⁹ Pa·s, gemessen bei 380°C,
und gegebenenfalls
(B) 5 - 50 Gew.-%, bezogen auf die Mischung der Komponenten A) und B), eines kautschukelastischen Pfropfcopolymeren sowie üblichen Zusatzstoffen,
dadurch gekennzeichnet, daß das zur Herstellung der Mischung eingesetzte Polytetrafluorethylen als Pulver mit einer mittleren Teilchengröße d₅₀ von mindestens 30 µm verwendet wird, daß das Polytetrafluorethylen in der Mischung in fibrillärer Struktur vorliegt, wobei die Länge der Fibrillen (1) 50 bis 300 µm und der Fibrillendurchmesser (d) 2 bis 20 µm betragen sowie das l/d-Verhältnis ≥ 5 ist.

2. Modifiziertes Polyoxymethylen nach Anspruch 1, dadurch gekennzeichnet, daß die Komponente C) in Mengen von 0,05 bis 1,5 Gew.-%, bezogen auf die Gesamtmischung, vorliegt, wobei die Länge der Fibrillen 75 bis 250 µm beträgt und das Verhältnis l/d ≥ 10 ist.

3. Modifiziertes Polyoxymethylen nach Anspruch 1, dadurch gekennzeichnet, daß die Komponente C) in Mengen von 0,05 bis 3 Gew.-%, insbesondere von 0,1 bis 1,5 Gew.-%, bezogen auf die Gesamtmischung, vorliegt, wobei die Länge der Fibrillen 100 bis 200 µm der Fibrillendurchmesser 2,5 bis 20 µm beträgt und das Verhältnis l/d ≥ 10 ist.

4. Modifiziertes Polyoxymethylen nach Anspruch 1, dadurch gekennzeichnet, daß die Mischung Zusatzstoffe wie Stabilisatoren, Nukleierungsmittel, Antistatika, Lichtschutzmittel, Pigmente oder Farbstoffe enthält.

5. Verwendung von modifiziertem Polyoxymethylen gemäß Anspruch 1 oder 2, zur Herstellung von Hohlblaskörpern und/oder Behältern nach dem Extrusionsblasverfahren.

## Claims

1. A modified polyoxymethylene comprising a mixture of
A) a polyoxymethylene homopolymer or polyoxymethylene copolymer and
C) 0.01 - 5% by weight, based on the total mixture, of polytetrafluoroethylene having a melt viscosity in the range from 10³ to 60 × 10⁹ Pa.s, measured at 380°C,
and, if appropriate,
(B) 5-50% by weight, based on the mixture of components A) and B), of a rubber-elastic graft copolymer, as well as customary additives,
wherein the polytetrafluoroethylene employed for preparation of the mixture is used as a powder having an average particle size d₅₀ of at least 30 µm, and the polytetrafluoroethylene is present in the mixture in a fibrillary structure, the fibril length (1) being 50 to 300 µm and the fibril diameter (d) being 2 to 20 µm, and the l/d ratio being ≥ 5.

2. A modified polyoxymethylene as claimed in claim 1, wherein component C) is present in an amount of 0.05 to 1.5% by weight, based on the total mixture, the fibril length being 75 to 250 µm and the l/d ratio being ≥ 10.

3. A modified polyoxymethylene as claimed in claim 1, wherein component C) is present in an amount of 0.05 to 3% by weight, in particular 0.1 to 1.5% by weight, based on the total mixture, the fibril length being 100 to 200 µm, the fibril diameter being 2.5 to 20 µm and the l/d ratio being ≥ 10.

4. A modified polyoxymethylene as claimed in claim 1, wherein the mixture comprises additives such as stabilizers, nucleating agents, antistatics, light protection agents, pigments or dyestuffs.

5. The use of a modified polyoxymethylene as claimed in claim 1 or 2 for the production of blow mouldings and/or containers by the extrusion blow moulding process.

## Revendications

1. Polyoxyméthylène modifié, constitué d'un mélange
A) d'un homopolymère du polyoxyméthylène ou d'un copolymère du polyoxyméthylène, et
C) de 0,01 à 5 % en poids, par rapport au mélange total, d'un polytétrafluoréthylène ayant une viscosité à l'état fondu, mesurée à 380°C, comprise dans l'intervalle de 10³ à 60.10⁹ Pa.s, et éventuellement
B) de 5 à 50 % en poids, par rapport au mélange des constituants A) et B), d'un copolymère greffé caoutchouteux, ainsi que d'additifs usuels,
caractérisé en ce que le polytétrafluoréthylène utilisé pour préparer le mélange est utilisé sous forme d'une poudre ayant une granulométrie moyenne d₅₀ d'au moins 30 µm ; que le polytétrafluoréthylène est, dans le mélange, présent sous forme fibrillaire ; la longueur des fibrilles (1) étant de 50 à 300 µm et le diamètre des fibrilles (d) étant de 2 à 20 µm, le rapport l/d étant ≥ 5.

2. Polyoxyméthylène modifié selon la revendication 1, caractérisé en ce que le constituant C) est présent en des quantités de 0,05 à 1,5 % en poids par rapport au mélange total, la longueur des fibrilles étant de 75 à 250 µm et le rapport l/d étant ≥ 10.

3. Polyoxyméthylène modifié selon la revendication 1, caractérisé en ce que le constituant C) est présent en des quantités de 0,05 à 3 % en poids, en particulier de 0,1 à 1,5 % en poids par rapport au mélange total, la longueur des fibrilles étant de 100 à 200 µm, le diamètre des fibrilles étant de 2,5 à 20 µm, et le rapport l/d étant ≥ 10.

4. Polyoxyméthylène modifié selon la revendication 1, caractérisé en ce que le mélange contient des additifs tels que des stabilisants, des agents de nucléation, des antistatiques, des photoprotecteurs, des pigments ou des colorants.

5. Utilisation d'un polyoxyméthylène modifié selon la revendication 1 ou 2, pour fabriquer des corps creux soufflés et/ou des récipients par le procédé d'extrusion-soufflage.
